# EUROPÄISCHE PATENTSCHRIFT

(11) **EP 4 105 006 B1**
(45) Veröffentlichungstag und Bekanntmachung des Hinweises auf die Patenterteilung: **18.06.2025**
(21) Anmeldenummer: 22177899.6
(22) Anmeldetag: 27.11.2019
(51) Int. Cl.: B29C 70/50, B27N 3/24, B30B 3/04, B30B 5/06, B30B 15/34

(54) **VORRICHTUNG ZUR PRESSENDEN BEARBEITUNG VON FLACHMATERIAL**
DEVICE FOR PRESSING FLAT MATERIAL
DISPOSITIF POUR LE TRAITEMENT PAR PRESSION DE MATÉRIAUX PLATS

(30) Priorität: 27.11.2018 DE 102018130019
(43) Veröffentlichungstag der Anmeldung: 21.12.2022
(62) Teilanmeldung aus: 19839321.7
(73) Patentinhaber: AZL Aachen GmbH, 52074 Aachen (DE); Rheinisch-Westfälische Technische Hochschule (RWTH) Aachen, 52062 Aachen (DE)
(72) Erfinder: Wendt, Albert, 52064 Aachen (DE); Emonts, Michael, 52074 Aachen (DE); Schares, Richard, 52072 Aachen (DE); Weiler, Thomas, 52062 Aachen (DE)
(74) Vertreter: Naeven, Ralf

(56) Entgegenhaltungen:
- EP-A1- 3 061 859
- EP-A2- 2 540 475
- DE-A1- 102011 089 543
- DE-C2- 2 414 762
- US-A1- 2017 297 295

## Beschreibung

Die Erfindung betrifft eine Vorrichtung zur pressenden Bearbeitung von Flachmaterial gemäß dem Oberbegriff des Anspruchs 1.

Derartige Vorrichtungen können zum Beispiel für eine pressende Bearbeitung, insbesondere zum kontinuierlichen Laminieren und/oder Imprägnieren von flächigen Materialbahnen oder Materialsegmenten eingesetzt werden. Dabei können auch Heizelemente vorgesehen sein, die das Flachmaterial für die pressende Bearbeitung erwärmen. Bei der Vorrichtung kann es sich zum Beispiel um eine Doppelbandpresse handeln, die beispielsweise zur Herstellung von faserverstärktem Kunststoffen eingesetzt wird.

Eine Vorrichtung der eingangs genannten Art ist aus der EP 2 540 475 B1 bekannt. Hierbei handelt es sich um eine Doppelbandpresse, bei der zwei endlose Stahlbänder angetrieben und mit ihrem jeweiligen Arbeitstrum gegeneinander gepresst werden, wobei zwischen den Stahlbändern das zu bearbeitende Material in Transportrichtung geführt und gepresst wird. Mittels induktiv wirkender Heizelemente werden die Stahlbänder und damit mittelbar das zu pressende Flachmaterial für die Bearbeitung erhitzt. Bei dem Flachmaterial handelt es sich um einen Verbundwerkstoff aus Thermoplast und Filamenten. In Transportrichtung hinter den Heizelementen ist eine Presswalzen umfassende Kühleinheit vorgesehen, die über die Stahlbänder auf Ober- und Unterseite des Flachmaterials drückt. Für den Kühlzweck ist mindestens eine der Presswalzen mit Kühlwasser durchströmt. Die induktiven Heizelemente umfassen im Einsatz der Doppelbandpresse im Heizbereich jeweils die beiden Stahlbänder. Dabei sind die Heizelemente so ausgestaltet, dass sie eine untere Hälfte und eine obere Hälfte aufweisen, die an Verbindungspunkten zeitweise voneinander trennbar sind und somit eine Öffnungsbewegung des Arbeitstrums mindestens eines der Stahlbänder erlauben. Die Presswalzen erzeugen einen Linienkontakt zum Stahlband und somit jeweils eine Druckaufbringung, die zeitlich und örtlich stark limitiert ist.

Aus der EP 0236905 B1 ist eine Vorrichtung zum Aufbringen einer Flächenpressung auf fortschreitende Werkstücke bekannt, die ebenfalls eine Doppelbandpresse darstellt. Der Pressdruck wird hierbei durch Druckplatten erzeugt, die beidseitig des jeweiligen Arbeitstrums der Pressbänder angeordnet sind. Der Transport des Flachmaterials wird durch geschlossene Bahnen von Rollensträngen ermöglicht, die zwischen der jeweiligen Druckplatte und dem zugehörigen Pressband geführt werden, auf den Druckplatten abrollen und dabei das Pressband und das zwischen den Pressbändern eingeklemmte Werkstück transportieren. Dabei wird vorgeschlagen, dass die Rollen an jedem Rollenstrang form- und/oder kraftschlüssig miteinander verbunden sind, mit einem ein Lagerspiel überschreitenden großen Ringspalt einen Achsstab umschließen und bis zur Achsanlage am Achsstab elastisch verformbar sind. Die elastische Verformbarkeit der Rollen kann toleranzausgleichend wirken. Zudem kann der genannte Ringspalt zum Schutz des Achsstabes wärmeisolierend wirken, sofern ein Aufheizen oder ein Abkühlen der Druckplatten erfolgt. Auf welche Weise eine aktive Beheizung erfolgen könnte, ist in diesem Stand der Technik nicht dargestellt.

Aus der DE 24 14 762 C2 ist eine Doppelbandpresse bekannt, bei der eine Mehrzahl von Presswalzenpaaren vorgesehen sind, deren den Durchgang des Flachmaterials erlaubender Spaltabstand veränderbar ist. Der Spaltabstand wird über einen Druck geregelt, der mittels einer Druckmesseinrichtung in einer Kalibrierstrecke der Doppelbandpresse geregelt wird. Das Stahlband kann mittels auf dem jeweiligen Stahlband gleitenden Gleitschuhen, welche jeweils zwischen zwei Presswalzenpaaren angeordnet sind, beheizt werden. Die Gleitschuhe sorgen für Abrieb und erhöhen damit den Verschleiß der Doppelbandpresse.

Die EP3 061 859 A1 offenbart eine Vorrichtung zur Herstellung von Folien unter Verwendung der Fasern von Altpapier, bei der dünnes bahnförmiges Flachmaterial zunächst auf einem Maschenband gebildet und über ein Transportband Pressvorgängen zugeführt wird. Das Pressen erfolgt durch Paare von Presswalzen, wobei zunächst ein erster Pressvorgang ohne Erwärmung des Flachmaterials und anschließend ein weiterer Pressvorgang bei geringerem Pressdruck und gleichzeitiger Erwärmung vorgesehen ist. Beide Pressvorgänge wirken unmittelbar auf das Flachmaterial. Eine Doppelbandpresse ist somit nicht realisiert. Die Beheizung des Flachmaterials kann über in den wärmenden Pressrollen vorgesehenen Halogen-Heizstrahlern erfolgen.

Es ist offenbart, die Presswalzen mit einer elastischen Schicht, z.B. aus Kunststoff zu versehen. Dabei sollen die elastischen Eigenschaften der Presswalzen dafür sorgen, den Kontakt der Presswalzen zueinander über deren gesamte axiale Länge zu gewährleisten.

Aus der WO2010/031364 A1 ist eine Vorrichtung zur Herstellung von Verbundwerkstoffbauteilen bekannt, bei der eine abrollende walzenförmige Andruckeinheit mit elastisch flexiblem Andruckkissen auf das auf einem festen Untergrund liegende bandförmige Werkstück presst, wobei letzteres unmittelbar vor dem Anpressen mit Laserstrahlung erhitzt wird. Ein Pressrollenpaar mit gegeneinander arbeitenden Pressrollen ist nicht offenbart. Es sind besondere Maßnahmen zum Schutz des Andruckkissens vor Überhitzung durch auftreffende Laserstrahlung vorgesehen, wie z.B. ein für Laserstrahlung (teil)transparentes Material des Andruckkissens, eine Abschattung des Andruckkissens gegenüber der Laserstrahlung oder ein durch das Andruckkissen hindurchgeführtes Kühlfluid. Das elastisch flexible Andruckkissen dient hier zum Ausgleich von Höhenunterschieden an dreidimensionalen Werkstückoberflächen beim Auftrag von Bandmaterial.

Der Erfindung liegt das technische Problem zugrunde, eine Vorrichtung der eingangs genannten Art zur Verfügung zu stellen, welche eine günstigere Druckverteilung der auf das Flachmaterial wirkenden Pressrollen ermöglicht.

Diese Aufgabe wird bei einer Vorrichtung der eingangs genannten Art durch das kennzeichnende Merkmal des Anspruchs 1 gelöst. Bevorzugte Ausführungsbeispiele der erfindungsgemäßen Vorrichtung ergeben sich aus den abhängigen Ansprüchen.

Gemäß Anspruch 1 ist eine Vorrichtung gemäß dem Oberbegriff des Anspruchs 1 dadurch gekennzeichnet, dass beide Pressrollen des Pressrollenpaares oder mindestens eines der Pressrollenpaare zumindest an ihrem Umfang in radialer Richtung eine gegenüber Stahlpressrollen erhöhte elastische Verformbarkeit aufweisen.

Gegenüber dem aus dem Stand der Technik bei stationären Pressrollenpaaren bekannten harten Pressrollen bewirkt die elastische Verformbarkeit die Verteilung der Presskraft auf eine größere Fläche. Dieser Flächendruck hat gegenüber denen von bekannten Stahlwalzen oder Stahlpressrollen bekannten Linienkontakt eine erhöhte Druckaufbringungszeit und somit eine verbesserte und homogenere Presswirkung zur Folge.

Gegenüber dem Einsatz von fluidischen Druckkissen, die ebenfalls eine flächige Druckzone erzeugen können, ist der anlagentechnische Aufwand wesentlich geringer und stark verschleißende Dichtungssysteme werden vermieden. Die ebenfalls denkbare Erzeugung flächiger Druckzonen durch den Einsatz von Gleitplatten würde stark limitierte Prozessdrücke sowie einen erhöhten Verschleiß zur Folge haben. Gemäß der Erfindung wird demgegenüber trotz der abrollenden Bewegung der Pressrollen ein Flächendruck ermöglicht.

Die erfindungsgemäße Vorrichtung kann vorteilhaft so ausgebildet werden, dass mindestens zwei in Transportrichtung hintereinander angeordnete Pressrollenpaare vorhanden sind. Insbesondere vorteilhaft ist die erfindungsgemäße Vorrichtung, da sie als eine Doppelbandpresse ausgebildet ist. In diesem Fall wirkt das mindestens eine Pressrollenpaar mittelbar, nämlich über jeweils eines der Bänder auf das Flachmaterial. Die elastische Verformbarkeit der Rollen des mindestens einen Pressrollenpaares ist dabei schonend für die verwendeten Bänder, ohne dass der Vorteil des Flächendruckes gegenüber dem reinen Linienkontakt verloren geht. Im Fall der Doppelbandpresse, bei der in der Regel mindestens eines der Bänder angetrieben ist, bilden das Bandpaar und das mindestens eine Pressrollenpaar die Mittel zum Transport des zu bearbeitenden Flachmaterials.

Die erfindungsgemäße Vorrichtung weist mindestens ein Heizelement zur Erwärmung des Flachmaterials auf. Heizelemente werden typischerweise für die Herstellung von Verbundmaterial oder zum Laminieren eingesetzt. Für die Erfindung können ein oder mehrere Heizelemente sinnvoll sein. Auch wenn in der folgenden Darstellung der Erfindung zur sprachlichen Vereinfachung zumeist die Heizelemente im Plural genannt sind, so betrifft die Erfindung auch entsprechende Ausführungsvarianten mit nur einem Heizelement.

In der Doppelbandpresse können die Heizelemente mittelbar über die Bänder der Doppelbandpresse auf das Flachmaterial wirken. Erfindungsgemäß wird eine induktive Beheizung eingesetzt. Ein Induktor oder mehrere Induktoren sind vorzugsweise beidseitig der Arbeitstrume der Pressenbänder, angeordnet.

Die erfindungsgemäße Vorrichtung kann auch so ausgebildet sein, dass mindesten eine Teilanzahl der Heizmittel ausgebildet ist, Magnetfelder zu erzeugen, welche eine überwiegende, senkrecht zu einer Mittelebene des Flachmaterials ausgerichtete Magnetfeldkomponente aufweisen. Dies kann mittels eines Flachinduktors oder eines ähnlich aufgebauten Induktors mit entsprechender Wirkung realisiert werden. So kann zum Beispiel vorgesehen sein, dass die Heizmittel oder zumindest eine Teilanzahl der Heizmittel zumindest streckenweise einen mäanderförmigen Verlauf aufweisen. Der mäanderförmige Verlauf kann dabei derart ausgerichtet sein, dass die Schleifen des Mäanders im Einsatz parallel zur Mittelebene des zu beheizenden Flachmaterials verlaufen.

Des Weiteren kann vorgesehen sein, dass zumindest eine Teilanzahl der Heizmittel ausgebildet ist, eine Teilstrecke des zu beheizenden Flachmaterials U-förmig zu umfassen. In diesem Fall können die Induktoren derart ausgestaltet sein, dass sie über eine Längsseite des Flachmaterials in eine Arbeitsposition geschoben werden können. Ein vollständiges Umschließen des Flachmaterials ist damit nicht gegeben, weshalb eine mit einem Öffnen und Schließen elektrischer Kontakte verbundene Relativbewegung zweier Teile desselben Induktors zueinander nicht erforderlich ist.

Die Wirkung des Heizelements auf das zu beheizende Gut kann erheblich vom Abstand Gut abhängen, insbesondere gilt dies für eine induktive Heizung mit ihrer Wechselwirkung zum induktiv ankoppelnden Material. Letzteres kann das zu bearbeitende Flachmaterial sein. Im Falle der Doppelbandpresse werden die Induktionsströme jedoch in der Regel im Bandmaterial der Doppelbandpresse erzeugt, das dann wiederum konduktiv das zu bearbeitende Flachmaterial erwärmt. Die elastische Verformbarkeit der Pressrollen mindestens eines der Pressrollenpaare kann dazu führen, dass sich die Position einer parallel zur Transportrichtung und parallel zu den Drehachsen der Pressrollen verlaufenden Mittelebene des Flachmaterials senkrecht zu dieser Mittelebende verschiebt. Die Verschiebung kann z.B. erfolgen, wenn beim Druckaufbau die Position der Drehachse eines der Pressrollen eines Pressrollenpaares in der Vorrichtung konstant bleibt, während die Drehachse der anderen Pressrolle sich verschiebt.

Um nun eine möglichst gut reproduzierbare Erwärmung des Flachmaterials gewährleisten zu können, kann es insbesondere vorteilhaft sein, die erfindungsgemäße Vorrichtung so auszubilden, dass Mittel vorgesehen sind, die eine Anpassung der Position des mindestens einen Heizelements an die Position der Mittelebene ermöglichen.

Eine solche Anpassung kann durch eine passive Nachführung des mindestens einen Heizelements erfolgen, zum Beispiel durch Abstandshalter zwischen dem Flachmaterial bzw. dem zugehörigen Band der Doppelbandpresse und dem mindestens einen Heizelement. Ein solcher Abstandshalter kann zum Beispiel über ein abrollendes oder gleitendes Distanzelement bewirkt werden. Gleichzeitig können elastisch wirkende Kräfte das mindesten einen Heizelement in Richtung auf das Flachmaterial oder das zugehörige Band der Doppelbandpresse drücken. Um eine Verschiebung der Heizelemente parallel zu Mittelebende des Flachmaterials zu vermeiden, können Führungsmittel vorgesehen werden.

Es kann aber auch vorteilhaft sein, die erfindungsgemäße Vorrichtung so auszubilden, dass der Abstand der Heizelemente zur Mittelebene des Flachmaterials durch Mittel zur Steuerung oder Regelung dieses Abstandes realisiert wird. Diese Mittel können zum Beispiel Elektromotoren und Linearführungen umfassen, wobei die Steuerung oder Regelung auf Sensorwerte von Abstandssensoren basieren kann, die die Position der Mittelebene relativ zu den Drehachsen der Pressrollen ermitteln. Dies hat den Vorteil, dass anders als bei den passiven Abstandshaltern bewusst Änderungen im Abstand herbeigeführt werden können, um das Maß oder die Art und Weise der Erwärmung zusätzlich beeinflussen zu können.

Es kann auch vorteilhaft sein, die erfindungsgemäße Vorrichtung so auszubilden, dass mindestens zwei Pressrollenpaare steuer- oder regelbar mit zueinander unterschiedlichen Presskräften beaufschlagbar sind. Auf diese Weise können unterschiedliche Druckprofile eingestellt werden, zum Beispiel mit über den Verlauf des Pressbereichs sich ändernden Drücken.

Die erfindungsgemäße Vorrichtung kann auch so ausgebildet sein, dass mindestens eine der Rollen mindestens eines Rollenpaares einen Hohlraum für die Durchführung eines Kühlfluids aufweist. Hierdurch wird das elastische Material am Umfang der Pressrollen gegen möglicherweise schädliche hohe Temperaturen geschützt.

Des Weiteren kann es vorteilhaft sein, die erfindungsgemäße Vorrichtung so auszubilden, dass mindestens eine der Pressrollen mindestens eines Pressrollenpaares am äußeren Umfang durch eine wärmeisolierende Schicht geschützt ist. Hierdurch ist ein weiterer wirkungsvoller Schutz der jeweiligen Pressrolle gegen den Einfluss der Temperatur des Flachmaterials beziehungsweise des Bandes der Doppelbandpresse gegeben. Die wärmeisolierende Schicht kann fester Bestandteil der Pressrolle sein. Alternativ kann die wärmeisolierende Schicht aber auch durch ein gesondertes, um einen Teilumfang der Rolle geführtes Band gebildet sein. Dies hat den Vorteil, dass die wärmeisolierende Schicht leicht auswechselbar ist und/oder bei seinem Umlauf durch eine von der Pressrolle beabstandete Kühlzone geführt werden kann. Als Materialien für die wärmeisolierende Schicht oder das wärmeisolierende Band können z.B. textile Strukturen sein, beispielsweise aus Glas, Carbon, Aramid, Basalt oder Hochleistungselastomere, wie z.B. Kalrez ^{®} von DuPont ^{™}, oder beschichtete Metallbänder. Vorteilhaft sind eine geringe Wärmeleitfähigkeit, hohe Temperaturbeständigkeit, Druck- und Abriebfestigkeit sowie Elastizität zumindest in Umfangrichtung der Pressrolle. Letzteres ist insbesondere dann vorteilhaft, wenn eine Verformung der elastisch verformbaren Schicht zu einer Umfangsänderung derselben führt, der die wärmeisolierende Schicht folgen muss.

Schließlich kann die erfindungsgemäße Vorrichtung so ausgeführt werden, dass im Einsatz ein Kühlfluid von außen auf den Umfang der Pressrolle und/oder auf die Stirnseiten der Pressrolle gerichtet wird, wodurch eine zusätzliche Abkühlwirkung gegeben ist.

Vorteilhafte Ausführungsformen der erfindungsgemäßen Vorrichtung werden im Folgenden anhand von Figuren dargestellt.

Es zeigt schematisch:
- Fig.1:: eine Doppelbandpresse,
- Fig.2:: ein Pressrollenpaar vor und nach dem Druckaufbau mit Heizelementen und zu bearbeitendem Flachmaterial ohne Heizmittelnachführung,
- Fig. 3:: ein Pressrollenpaar vor und nach dem Druckaufbau mit Heizelementen und zu bearbeitendem Flachmaterial mit Heizelementnachführung,
- Fig. 4:: das Prinzip der Heizmittelnachführung mit Abstandshaltern,
- Fig. 5:: das Prinzip der motorischen Heizelementnachführung,
- Fig. 6:: Pressrolle mit integrierter wärmeisolierender Schicht,
- Fig. 7:: Pressrolle mit gesondertem, um eine Umlenkrolle geführtem Wärmeisolationsband,
- Fig. 8:: Pressrolle mit gesondertem, um zwei Umlenkrollen geführtem Wärmeisolationsband,
- Fig. 9:: perspektivisch in seitlicher Aufsicht ein Werkstück mit induktiv wirkenden Heizelementen und
- Fig. 10:: ein das Werkstück umfassendes induktives Heizelement in einer Seitenansicht.

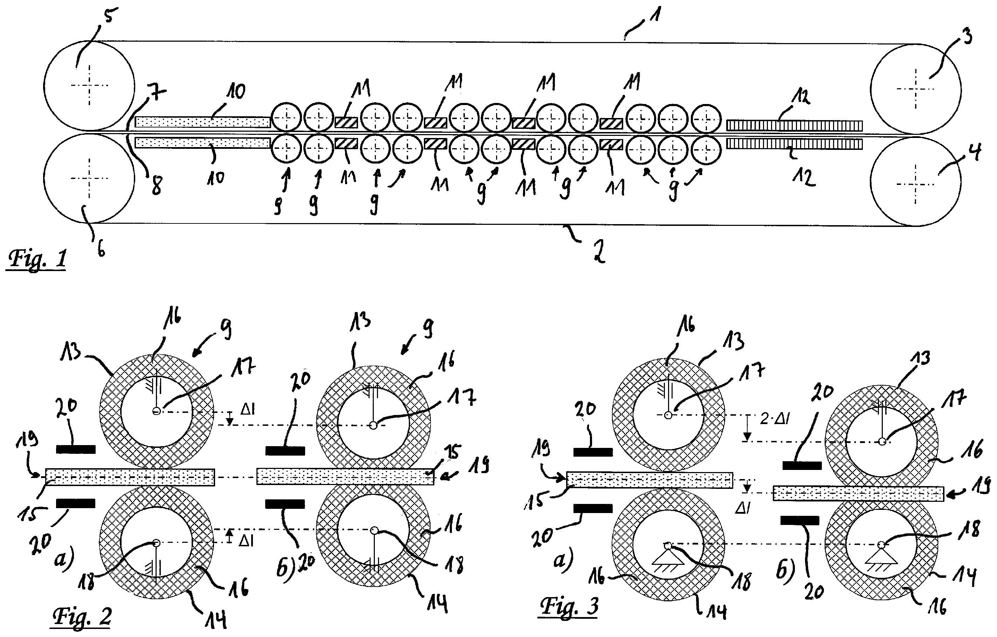

Fig. 1 zeigt schematisch im seitlichen Querschnitt eine Doppelbandpresse mit einem oberen Pressenband 1 und einem unteren Pressenband 2. Die endlosen Pressenbänder 1 bzw. 2 sind jeweils um eine obere Antriebsrolle 3 bzw. untere Antriebsrolle 4 sowie um eine obere Umlenkrolle 5 bzw. eine untere Umlenkrolle 6 geführt. Zwischen einem Arbeitstrum 7 des oberen Pressenbandes 1 und einem Arbeitstrum 8 des unteren Pressenbandes 2 wird hier nicht dargestelltes, zu bearbeitendes Flachmaterial geführt, das in einer Transportrichtung (in Fig. 1 von links nach rechts) von den umlaufenden Pressenbändern 1 und 2 mitgeführt wird. Entlang der Arbeitstrume 7 und 8 sind eine Mehrzahl von Pressrollenpaaren 9 angeordnet, mit denen der obere Arbeitstrum 7 und der untere Arbeitstrum 8 gegen das zu bearbeitende, hier nicht dargestellte Flachmaterial gepresst werden. Des Weiteren sind entlang der Arbeitstrume 7 und 8 in Fig. 1 nicht einzeln dargestellte Heizelemente in einer Hauptheizzone 10 und in Zwischenheizzonen 11 angeordnet, die induktiv wirken. Es ist entweder das Material der Pressenbänder 1 und 2 induktiv ankoppelnd oder das zu bearbeitende Flachmaterial. Durch die Vielzahl der Heizelemente und ihre Positionierung zwischen den Pressrollenpaaren 9 kann eine für die Bearbeitung des Flachmaterials erforderliche Temperatur über eine lange Strecke aufrechterhalten werden. Die hier dargestellte Anordnung von jeweils einer Zwischenheizzone 11 zwischen zwei Pressrollenpaaren 9 ist nur beispielhaft. Die Anzahl der Zwischenheizzonen 11 und die Anordnung der an die Zwischenheizzonen 11 angrenzenden Pressrollenpaare 9, z.B. einzeln oder in Gruppen zu zwei oder mehr Pressrollenpaaren 9, kann je nach Anforderungen des Betriebs der Doppelbandpresse anders gestaltet werden. In Transportrichtung gesehen am Ende der Arbeitstrume 7 und 8 sind optional Kühlstrecken 12 angeordnet.

Fig. 2 zeigt schematisch ein Pressrollenpaar 9 mit einer oberen Pressrolle 13 und einer unteren Pressrolle 14, wobei in a) die Situation vor Aufbringen eines Pressdruckes und in b) die Situation unter einem bestimmten Pressdruck dargestellt ist. Zwischen den Pressrollen 13 und 14 ist schematisch ein zu bearbeitendes Werkstück 15 aus Flachmaterial dargestellt, wobei in der Darstellung die das Werkstück 15 zwischen sich nehmenden Pressenbänder 7 und 8 (siehe Fig. 1) nicht erkennbar sind. Die Pressrollen 13 und 14 weisen auf ihrem äußeren Umfang einen elastisch verformbaren Bereich 16 auf. Der Anpressdruck von beiden Pressrollen 13 und 14 wird gemäß Fig. 2 symmetrisch aufgebaut, d. h. aufgrund der Nachgiebigkeit des elastisch verformbaren Bereichs 16 bewegen sich die Drehachsen 17 bzw. 18 der Pressrollen 13 und 14 mit jeweils der gleichen Wegstrecke ΔI auf das Werkstück 15 zu, weshalb die vertikale Position einer Mittelebene 19 des Werkstückes 15 durch das Aufbringen des Pressdruckes nicht verändert wird. Fig. 2 zeigt außerdem schematisch die Position von Heizelementen 20, wie sie in der Hauptheizzone 10 oder in den Zwischenheizzonen 11 (siehe Fig. 1) vorgesehen sein können. Der Abstand dieser Heizelemente 20 senkrecht zur Mittelebene 19 bleibt unverändert trotz der mit Aufbringen des Pressdruckes erzeugten Verschiebung der Positionen der Drehachsen 17 und 18. Um ein zur Mittelebene 19 symmetrisches Verfahren der Pressenrollenpaar 13 und 14 zu erreichen, ist jedoch ein erheblicher Regelungsaufwand zu betreiben.

Fig. 3 zeigt eine zur Fig. 2 ähnliche Situation. Gleiche Bezugszahlen beziehen sich auf gleiche Vorrichtungselemente, so dass auf die Beschreibung zu Fig. 2 verwiesen werden kann. Die in der Teilfigur a) gezeigte Ausgangsposition der Pressrollen 13 und 14 ist identisch zu der Ausgangsposition in Fig. 2a). Ein Unterschied ist, dass die Drehachse 18 der unteren Pressrolle 14 in der Anordnung gemäß Fig. 3 in ihrer Position fixiert ist. Zum Aufbringen des Pressdruckes wird somit lediglich die Drehachse 17 der oberen Pressrolle um eine Wegstrecke 2ΔI in Richtung auf die untere Drehachse 18 bewegt. Da die Verformung der Pressrollen 13 bzw. 14 aufgrund des ansonsten übereinstimmenden Aufbaus gleich ist, wird sich die Mittelebene 19 des Werkstückes 15 um die Wegstrecke ΔI auf die untere Pressrolle 14 zu bewegen. Um zu verhindern, dass durch das Aufbringen des Pressdruckes die Wirkung der Heizelemente 20 auf das Werkstück 15 verändern wird, ist vorgesehen, den Abstand der Heizelemente 20 zur Mittelebene 19 nicht zu verändern und die Heizelemente 20 ebenfalls um die Wegstrecke ΔI zu verfahren. Mit dieser Maßnahme wird somit der Vorteil des mittels des elastisch verformbaren Bereichs 16 erreichten Flächendruckes ohne Einschränkung durch eine ansonsten nur eingeschränkt reproduzierbare Wirkung der Heizelemente 20 auf das Werkstück 15 erreicht.

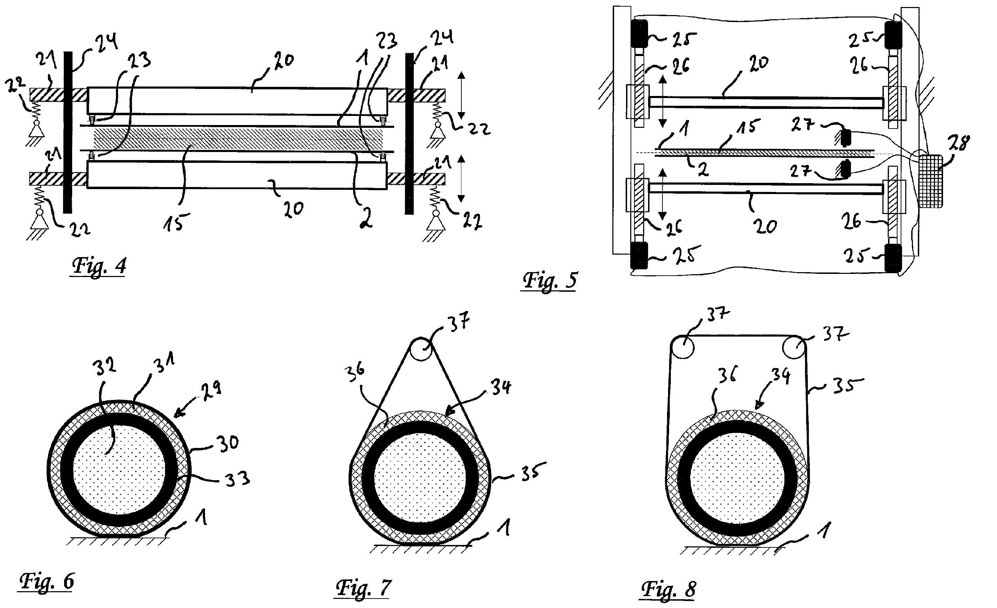

Fig. 4 zeigt schematisch in einem Querschnitt senkrecht zur Materialtransportrichtung eine Doppelbandpresse mit zwei Heizelementen 20 von denen eines oberhalb und das andere unterhalb des Werkstückes 15 und der das Werkstück 15 zwischen sich aufnehmenden Pressenbänder 1 und 2 angeordnet ist. Die Heizelemente 20 werden derart an Halterungen 21 gehalten, dass während des Betriebs der Doppelbandpresse ein möglichst konstanter Abstand zwischen dem jeweiligen Heizelement 20 und dem zugehörigen Pressenband 1 bzw. 2 gegeben ist. Hierzu sind hier beispielhaft Abstandshalter 23 vorgesehen. Die Heizelemente 20 werden, um einer möglichen Vertikalbewegung des jeweiligen Pressenbandes 1 bzw. 2 folgen zu können, mit einer Kraft in Richtung des zugehörigen Pressenbandes 1 bzw. 2 gedrückt, die hier jeweils durch ein Federelement 22 symbolisiert ist. Diese Kraft kann sich für das obere der Heizelemente 20 auch aus seiner Gewichtskraft und einer der Gravitation entgegenwirkenden Stützkraft zusammensetzen, wobei die Stützkraft die Belastung des oberen Pressenbandes 1 reduzieren soll. Die Abstandshalter 23 sind vorzugsweise am jeweiligen Heizelement 20 fixiert und können am zugehörigen Pressenband 1 bzw. 2 abrollen. Es können selbstverständlich alternativ oder zusätzlich auch gleitende Abstandshalter vorgesehen werden. Für die Führung der Halterungen 21 sind Führungselemente 24 vorgesehen.

Fig. 5 zeigt ebenfalls im Querschnitt eine Doppelbandpresse, bei der - anders als nach Fig. 4 - der Abstand zwischen den Heizelementen 20 und dem zwischen den Pressenbändern 1 und 2 angeordneten Werkstück 15 mittels Elektromotoren 25 und Linearführungen 26 eingestellt wird. Als Basisgröße für die über eine Steuer-/ oder Regeleinrichtung 28 erfolgende Steuerung oder Regelung der Elektromotoren 25 dienen Sensorwerte von Abstandssensoren 27, die beispielsweise mechanisch, optisch oder kapazitiv messen.

Fig. 6 zeigt schematisch eine auf das obere Pressenband 1 drückende Pressrolle 29 mit einer fest an ihrem äußeren Umfang angeordneten wärmeisolierenden Schicht 30, die unmittelbar auf einen elastisch verformbaren Bereich 31 der Pressrolle aufgebracht ist. Der elastisch verformbare Bereich 31 wiederum umgibt einen Hohlzylinder 33 aus einem demgegenüber steifen Material, z.B. Edelstahl. Ein innerer Hohlraum 32 des Hohlzylinders 33 kann für den Durchfluss eines Kühlfluids genutzt werden. Der elastisch verformbare Bereich 31, z.B. aus Silikon, kann beispielhaft eine Stärke von 1 bis 20mm, vorzugsweise 5 bis 15 mm, aufweisen und eine Härte zwischen beispielsweise 20 Shore-A und 65 Shore-A, vorzugsweise zwischen 50 Shore-A und 60 Shore-A.

Fig. 7 zeigt eine Pressrolle 34 bei der die wärmeisolierende Schicht nicht auf dem vollständigen Umfang fixiert ist, sondern durch ein umlaufendes Band 35 realisiert wird, welches nur auf einem Teil seines Umfangs am elastisch verformbaren Bereich 36 anliegt und ansonsten mit Abstand zur Pressrolle 34 über eine Umlenkrolle 37 geführt ist. In dem beabstandeten Bereich zwischen Pressrolle 34 und Umlenkrolle 37 besteht eine verbesserte Möglichkeit der gesonderten Kühlung des Bandes 35. Zudem ist das verschließbehaftete Band 35 leicht austauschbar. Fig. 8 zeigt eine zur Fig. 7 ähnliche weitere Variante, bei der das Band 35 jedoch über zwei Umlenkrollen 37 geführt ist, wodurch ein geringerer Umschlingungswinkel des Bandes 35 mit der Pressenrolle 34 realisiert wird und eine bessere Kühlmöglichkeit gegeben sein kann. wegen der weiteren Einzelheiten wird auf die Beschreibung zu Fig. 7 verwiesen.

Für sämtliche Ausführungsformen gilt, dass die Pressrollen nicht zwangsläufig Hohlzylinder sein müssen. Es sind auch andere Formen mit oder ohne Durchgänge für ein Kühlfluid denkbar.

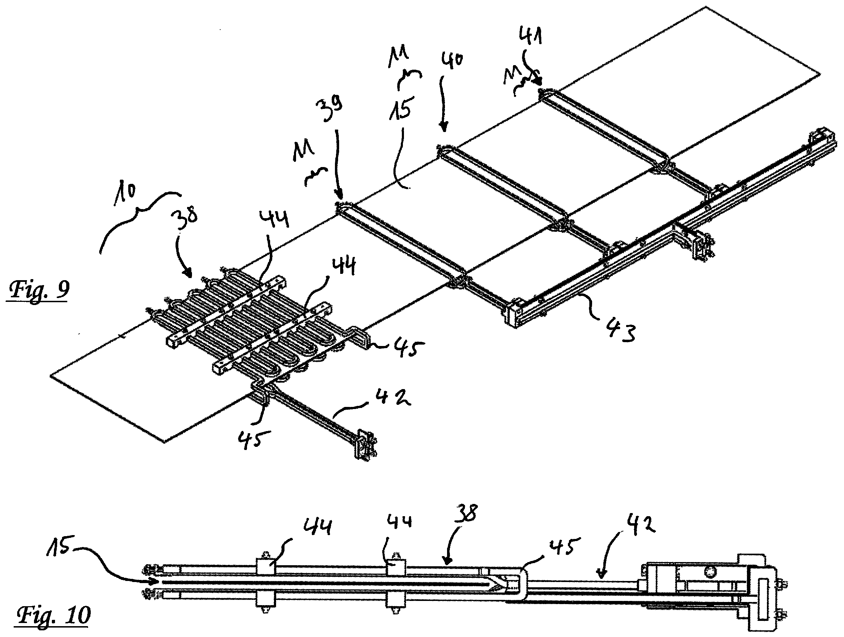

Fig. 9 zeigt in perspektivischer Schrägaufsicht ein zu bearbeitendes Werkstück 15, wobei von der Doppelbandpresse lediglich ein in einer Hauptheizzone 10 (siehe auch Fig. 1) angeordnetes, induktiv wirkendes erstes Heizelement 38 mit einem Anschlusselement 42 und jeweils ein in Zwischenheizzonen 11 angeordnetes weiteres induktiv wirkendes Heizelement 39, 40 bzw. 41 mit einem Sammelanschlusselement 43 schematisch gezeigt sind. In der Hauptheizzone 10 ist das erste Heizelement 38 in einer Vielzahl von Heizschleifen zum einen oberhalb des Werkstückes 15 und zum anderen unterhalb des Werkstückes 15 geführt. In den Zwischenheizzonen 11 weist das zweite Heizelement 39, das dritte Heizelement 40 und das vierte Heizelement 41 jeweils eine Heizschleife oberhalb und eine Heizschleife unterhalb des Werkstückes 15 auf. In den Zwischenheizzonen 11 sind auch mehr als jeweils eine Heizschleife und in unterschiedlichen Zwischenheizzonen 11 unterschiedliche Anzahlen von Heizschleifen denkbar. Die Heizelemente 39, 40 und 41 können dabei wie in Fig. 9 dargestellt über das Sammelanschlusselement 43 gemeinsam durch eine hier nicht dargestellte, vorzugsweise steuerbare Wechselstromquelle mit Leistung und Kühlwasser versorgt werden, oder ohne Sammelanschlusselement einzeln direkt mit jeweils einer steuerbaren Wechselstromquelle. Letzteres bietet den Vorteil der einzelnen Leistungsregelung und damit individuellen Erwärmung in den Haltezonen 11.

Fig. 10 zeigt das erste um das Werkstück 15 geführte erste Heizelement 38 mit dem Anschlusselement 42 in einer Seitenansicht. Die Darstellungen von Fig. 9 und Fig. 10 unterscheiden sich leicht, insbesondere im Anschlusselement 42, was aber hier keine Bedeutung haben soll. Das Anschlusselement 42 ist - wie auch das Sammelanschlusselement 43 (Fig. 9) - für die Kontaktierung an einer hier nicht dargestellten, vorzugsweise steuerbaren Wechselstromquelle vorbereitet. Die Heizschleifen des ersten Heizelements 38 sind untereinander mit zwei parallel zueinander verlaufenden Querverbindern 44 aus einem elektrisch isolierenden Material mechanisch gegeneinander stabilisiert.

Die elektrische Verbindung zwischen den oberen Schleifen und den unteren Schleifen des ersten Heizelements 38 ist durch zwei Übergangsstücke 45 realisiert, die jeweils auf der dem Anschlusselement 42 zugewandten Seite um die Kante des Werkstücks 15 geführt sind. Auf der den Übergangsstücken 45 abgewandten Seite ist das erste Heizelement 38 offen und kann somit seitlich über das Werkstück 15 geführt werden oder das Werkstück 15 kann seitlich eingeführt werden, sodass eine Wartung oder ein Austausch des ersten Heizmoduls 38 auch bei in der Doppelbandpresse befindlichem Werkstück 15 möglich ist.

Der dargestellte Verlauf der Schleifen des ersten Heizelements 38 oberhalb und unterhalb des Werkstückes führt dazu, dass sich die im Betrieb des ersten Heizelements 38 erzeugten Magnetfelder senkrecht zur Mittelebene des Werkstückes 15 ausrichten, d.h. es werden magnetische Querfelder erzeugt. Derartige Querfelder können bei der Erwärmung von Flachmaterial, das heißt bei großem Verhältnis von Materialbreite zu Materialdicke, technisch und wirtschaftlich effizienter sein als parallel zur Mittelebene verlaufende Längsfelder.

Die Ausführungen zum ersten Heizelement 38 gelten in entsprechender Weise auch für die weiteren Heizelemente 39, 40 und 41 in den Zwischenheizzonen 11.

Selbstverständlich sind auch andere Ausführungsvarianten für die Heizelemente möglich, z.B. solche, bei denen der unter dem Werkstück 15 verlaufende Teil und der oberhalb des Werkstückes verlaufende Teil zumindest über eine gewisse Wegstrecke unabhängig voneinander bewegbar sind, z.B. um die Ausführungsform gemäß Fig. 5 realisieren zu können. Hierfür können die beiden Teile z.B. separaten Anschlusselementen zugeordnet werden oder die elektrische Verbindung zwischen den beiden Bestandteilen erfolgt über flexible oder in der Länge veränderbare Übergangsstücke. Es ist zu beachten, dass die Vertikalbewegung der Heizelemente für die Gewährleistung eines weitgehend konstanten Abstandes zwischen Heizelement und Werkstück (siehe z.B. Fig. 4 und 5) nur geringe Strecken im mm- oder cm-Bereich erfordert.

### Bezugszeichenliste

| | | | |
|---|---|---|---|
| 1 | Oberes Pressenband | 32 | Hohlraum |
| 2 | Unteres Pressenband | 33 | Hohlzylinder |
| 3 | Obere Antriebsrolle | 34 | Pressrolle |
| 4 | Untere Antriebsrolle | 35 | Band |
| 5 | Umlenkrolle | 36 | elastisch verformbarer Bereich |
| 6 | Umlenkrolle | 37 | Umlenkrolle |
| 7 | Arbeitstrum oberes Pressenband | 38 | erstes Heizelement |
| 8 | Arbeitstrum unteres Pressenband | 39 | zweites Heizelement |
| 9 | Pressrollenpaar | 40 | drittes Heizelement |
| 10 | Hauptheizzone | 41 | viertes Heizelement |
| 11 | Zwischenheizzone | 42 | Anschlusselement |
| 12 | Kühlstrecke | 43 | Sammelanschlusselement |
| 13 | obere Pressrolle | 44 | Querverbinder |
| 14 | untere Pressrolle | 45 | Übergangsstück |
| 15 | Werkstück | | |
| 16 | elastisch verformbarer Bereich | | |
| 17 | Drehachse | | |
| 18 | Drehachse | | |
| 19 | Mittelebene | | |
| 20 | Heizelement | | |
| 21 | Halterung | | |
| 22 | Federelement | | |
| 23 | Abstandshalter | | |
| 24 | Führungselement | | |
| 25 | Elektromotor | | |
| 26 | Linearführung | | |
| 27 | Abstandssensoren | | |
| 28 | Steuer-/ oder Regeleinrichtung | | |
| 29 | Pressrolle | | |
| 30 | wärmeisolierende Schicht | | |
| 31 | elastisch verformbarer Bereich | | |

## Patentansprüche

1. Vorrichtung zur pressenden Bearbeitung von Flachmaterial, umfassend Mittel zum Transport des Flachmaterials (15) in eine Transportrichtung und mindestens ein in Transportrichtung stationäres, beidseitig auf das Flachmaterial (15) wirkendes Pressrollenpaar (9), wobei die Vorrichtung eine Doppelbandpresse ist, und Heizmittel (20) zur Erwärmung des Flachmaterials (15),
wobei zumindest eine Teilanzahl der Heizmittel (20) induktiv wirkt,
**dadurch gekennzeichnet, dass**
beide Pressrollen (13, 14, 29, 34) des Pressrollenpaares (9) oder beide Pressrollen (13, 14, 29, 34) mindestens eines der Pressrollenpaare (9) zumindest an ihrem Umfang in radialer Richtung eine gegenüber Stahlpressrollen erhöhte elastische Verformbarkeit aufweisen.

2. Vorrichtung nach Anspruch 1, **dadurch gekennzeichnet, dass** die Pressrollen (13, 14, 29, 34) mit erhöhter elastischer Verformbarkeit jeweils einen elastisch verformbaren Bereich (16, 31, 36) mit einer Stärke von 1 bis 20mm, vorzugsweise 5 bis 15 mm, und einer Härte zwischen 20 Shore-A und 65 Shore-A, vorzugsweise zwischen 50 Shore-A und 60 Shore-A aufweisen, dass die Pressrollen (13, 14, 29, 34) mit erhöhter elastischer Verformbarkeit jeweils eine fest an ihrem äußeren Umfang angeordnete wärmeisolierende Schicht (30) aufweisen, wobei die wärmeisolierende Schicht (30) jeweils unmittelbar auf den elastisch verformbaren Bereich (16, 31, 36) der Pressrolle (13, 14, 29, 34) aufgebracht ist und dass der elastisch verformbare Bereich (16, 31, 36) jeweils einen Hohlzylinder (33) aus einem demgegenüber steiferen Material umgibt.

3. Vorrichtung nach einem der vorherigen Ansprüche, **dadurch gekennzeichnet, dass** mindestens zwei in Transportrichtung hintereinander angeordnete Pressrollenpaare (9) vorhanden sind.

4. Vorrichtung nach einem der vorherigen Ansprüche, **dadurch gekennzeichnet, dass** die Heizmittel (20) mittelbar über die Bänder (1, 2) der Doppelbandpresse auf das Flachmaterial (15) wirken.

5. Vorrichtung nach einem der vorherigen Ansprüche, **dadurch gekennzeichnet, dass** mindesten eine Teilanzahl der Heizmittel (20) ausgebildet ist, Magnetfelder zu erzeugen, welche eine überwiegende, senkrecht zu einer Mittelebene (19) des Flachmaterials (15) ausgerichtete Magnetfeldkomponente aufweisen.

6. Vorrichtung nach einem der vorherigen Ansprüche, **dadurch gekennzeichnet, dass** die Heizmittel (20) oder zumindest eine Teilanzahl der Heizmittel (20) zumindest streckenweise einen mäanderförmigen Verlauf aufweisen.

7. Vorrichtung nach einem der vorherigen Ansprüche, **dadurch gekennzeichnet, dass** zumindest eine Teilanzahl der Heizmittel (20) ausgebildet ist, eine Teilstrecke des zu beheizenden Flachmaterials (15) U-förmig zu umfassen.

8. Vorrichtung nach einem der vorherigen Ansprüche, **gekennzeichnet durch** Mittel zur Steuerung oder Regelung eines Abstandes der Heizmittel (20) zu einer parallel zur Transportrichtung und parallel zu den Drehachsen der Pressrollen (13, 14, 29, 34) verlaufenden Mittelebene (19) des Flachmaterials (15).

9. Vorrichtung nach einem der vorherigen Ansprüche, **gekennzeichnet durch** Abstandshalter (23) zur Sicherstellung eines konstanten Abstandes der Heizmittel (20) zu einer parallel zur Transportrichtung verlaufenden Mittelebene (19) des Flachmaterials (15).

10. Vorrichtung nach einem der vorherigen Ansprüche, **dadurch gekennzeichnet, dass** mindestens zwei Pressrollenpaare (9) steuer- oder regelbar mit unterschiedlichen Presskräften beaufschlagbar sind.

11. Vorrichtung nach einem der vorherigen Ansprüche, **dadurch gekennzeichnet, dass** mindestens eine der Pressrollen (13, 14, 29, 34) mindestens eines Pressrollenpaares (19) einen Hohlraum (32) für die Durchführung eines Kühlfluids aufweist.

12. Vorrichtung nach einem der vorherigen Ansprüche, **gekennzeichnet durch** Kühlmittel, welche im Einsatz ein Kühlfluid von außen auf den Pressrollenumfang und/oder auf die Pressrollenstirnseiten richten.

## Claims

1. A device for pressing processing flat material, comprising
means for transporting the flat material (15) in a transport direction and at least one pressing roller pair (9) which is stationary in the transport direction and acts on the flat material (15) on both sides, wherein the device is a double-belt press, and
heating means (20) for heating the flat material (15), wherein at least a number of the heating means (20) act inductively
**characterized in that,'**
both pressing rollers (13, 14, 29, 34) of the pair of pressing rollers (9) or both pressing rollers (13, 14, 29, 34) of at least one of the pairs of pressing rollers (9) have, at least on their circumference, an increased elastic deformability in the radial direction compared to pressing rollers made of steel.

2. Device according to claim 1, **characterized in that** the pressing rollers (13, 14, 29, 34) with increased elastic deformability each have an elastically deformable region (16, 31, 36) with a thickness of 1 to 20 mm, preferably 5 to 15 mm, and a hardness of between 20 Shore-A and 65 Shore-A, preferably between 50 Shore-A and 60 Shore-A, **in that** the pressing rollers (13, 14, 29, 34) with increased elastic deformability each have a heat-insulating layer (30) arranged fixedly on their outer circumference, the heat-insulating layer (30) being applied in each case directly to the elastically deformable region (16, 31, 36) of the pressing roller (13, 14, 29, 34), and **in that** the elastically deformable region (16, 31, 36) in each case surrounds a hollow cylinder (33) made of a material which is stiffer in comparison.

3. The device according to any one of the preceding claims, **characterized in that** there are at least two pressing roller pairs (9) arranged one behind the other in the transport direction.

4. The device according to any one of the preceding claims, **characterized in that** the heating means (20) act indirectly on the flat material (15) via the belts (1, 2) of the double-belt press.

5. The device according to any one of the preceding claims, **characterized in that** at least a number of the heating means (20) are designed to generate magnetic fields which have a predominant magnetic field component oriented perpendicular to a center plane (19) of the flat material (15).

6. The device according to any one of the preceding claims, **characterized in that** the heating means (20) or at least a number of the heating means (20) have a meandering course at least in sections.

7. The device according to any one of the preceding claims, **characterized in that** at least a number of the heating means (20) are designed to encompass a section of the flat material (15) to be heated in a U-shape.

8. The device according to any one of the preceding claims, **characterized by** means for controlling or regulating a distance between the heating means (20) and a center plane (19) of the flat material (15) running parallel to the transport direction and parallel to the axes of rotation of the pressing rollers (13, 14, 29, 34).

9. The device according to any one of the preceding claims, **characterized by** spacers (23) to ensure a constant distance between the heating means (20) and a center plane (19) of the flat material (15) running parallel to the transport direction.

10. The device according to any one of the preceding claims, **characterized in that** at least two pressing roller pairs (9) can be acted upon in a controllable or regulatable manner with different pressing forces.

11. The device according to any one of the preceding claims, **characterized in that** at least one of the pressing rollers (13, 14, 29, 34) of at least one pressing roller pair (19) comprises a cavity (32) for the passage of a cooling fluid.

12. The device according to any one of the preceding claims, **characterized by** cooling means which, during use, direct a cooling fluid from the outside onto the circumference of the pressing roller and/or onto the end faces of the pressing roller.

## Revendications

1. Dispositif pour le traitement par pression de matériaux plats, comprenant un moyen pour le transport du matériau plat (15) dans une direction de transport et au moins une paire de rouleaux de pression (9) stationnaire dans la direction de transport et agissant des deux côtés sur le matériau plat (15),
**caractérisé en ce que**
les deux rouleaux de pression (13, 14, 29, 34) de la paire de rouleaux de pression (9) ou les deux rouleaux de pression (13, 14, 29, 34) d'au moins l'une des paires de rouleaux de pression (9) présentent, au moins sur leur circonférence, une déformabilité élastique accrue dans la direction radiale par rapport aux rouleaux de pressage en acier.

2. Dispositif selon la revendication 1, **caractérisé en ce que** les rouleaux de pression (13, 14, 29, 34) présentant une déformabilité élastique accrue comportent chacun une zone élastiquement déformable (16, 31, 36) d'une épaisseur de 1 à 20 mm, de préférence de 5 à 15 mm, et d'une dureté comprise entre 20 Shore-A et 65 Shore-A, de préférence entre 50 Shore-A et 60 Shore-A, **en ce que** les rouleaux de pression (13, 14, 29, 34) à déformabilité élastique accrue comportent chacun une couche thermo-isolante (30) disposée de manière fixe sur leur périphérie extérieure, la couche thermo-isolante (30) étant appliquée directement sur la zone élastiquement déformable (16, 31, 36) du rouleau de pression (13, 14, 29, 34) et la zone élastiquement déformable (16, 31, 36) entourant respectivement un cylindre creux (33) en un matériau plus rigide par rapport à celle-ci.

3. Dispositif selon l'une des revendications précédentes, **caractérisé en ce qu'**il existe au moins deux paires de rouleaux de pression (9) disposées en série dans la direction de transport.

4. Dispositif selon l'une des revendications précédentes, **caractérisé en ce que** les moyens de chauffage (20) agissent indirectement sur le matériau plat (15) par l'intermédiaire des bandes (1, 2) de la presse à double bande.

5. Dispositif selon l'une des revendications précédentes, **caractérisé en ce qu'**au moins une partie des moyens de chauffage (20) est conçue pour produire des champs magnétiques qui présentent une composante de champ magnétique prédominante, orientée perpendiculairement à un plan médian (19) du matériau plat (15).

6. Dispositif selon l'une des revendications précédentes, **caractérisé en ce que** les moyens de chauffage (20) ou au moins une partie des moyens de chauffage (20) présentent au moins dans certaines régions un tracé en méandres.

7. Dispositif selon l'une des revendications précédentes, **caractérisé en ce qu'**au moins une partie des moyens de chauffage (20) est conçue pour entourer en forme de U une section du matériau plat (15) à chauffer.

8. Dispositif selon l'une des revendications précédentes, **caractérisé par** des moyens de commande ou de réglage d'une distance des moyens de chauffage (20) par rapport à un plan médian (19) du matériau plat (15), parallèle à la direction de transport et parallèle aux axes de rotation des rouleaux de pression (13, 14, 29, 34).

9. Dispositif selon l'une des revendications précédentes, **caractérisé par** des entretoises (23) destinées à assurer un écartement constant des moyens de chauffage (20) par rapport à un plan médian (19) du matériau plat (15) s'étendant parallèlement à la direction de transport.

10. Dispositif selon l'une des revendications précédentes, **caractérisé en ce qu'**au moins deux paires de rouleaux de pression (9) peuvent être actionnées de manière commandée ou réglable par des collerettes de pression différentes.

11. Dispositif selon l'une des revendications précédentes, **caractérisé en ce qu'**au moins l'un des rouleaux de pression (13, 14, 29, 34) d'au moins une paire de rouleaux de pression (19) comporte une cavité (32) pour le passage d'un fluide de refroidissement.

12. Dispositif selon l'une des revendications précédentes, **caractérisé par** des moyens de refroidissement qui, lors de l'utilisation, dirigent un fluide de refroidissement de l'extérieur vers la périphérie du rouleau de presse et/ou vers les faces frontales du rouleau de presse.
